## Europäisches Patentamt

## European Patent Office

## Office européen des brevets

(11) Publication number: **0 206 735**
**A2**

# (12) EUROPEAN PATENT APPLICATION

(21) Application number: **86304658.7**

(22) Date of filing: **17.06.86**

(51) Int. Cl.⁴: **G 01 G 9/00**, G 01 B 15/02

(30) Priority: **19.06.85 GB 8515552**

(43) Date of publication of application: **30.12.86**
**Bulletin 86/52**

(84) Designated Contracting States: **AT BE CH DE FR GB IT LI LU NL SE**

(71) Applicant: **BOYLE CONTROLS LIMITED, Burch Road, Northfleet Kent, DA11 9NE (GB)**

(72) Inventor: **Woodruff, Thomas Robert, Burch Road, Northfleet Kent DA 9NE (GB)**

(74) Representative: **JENSEN & SON, 8 Fulwood Place High Holborn, London WC1V 6HG (GB)**

(54) Coating weight and thickness gauges.

(57) An apparatus for measuring the weight, thickness or composition of a coating or coatings applied to a substrate includes a primary radiation source (11), a detector means (10), and means (6) for processing radiation reflected by the coating or coatings. The source of primary radiation delivers an output which is applied to the coating or coatings and the detector means (10) receives the reflected secondary radiation, the detector means (10) including at least two energy-sensitive or energy-dependent detectors comprising ionisation chambers (12, 13) fitted with energy-sensitive radiation filters (14, 15) able to differentiate between different elements of the coating or coatings from one another, the outputs of the chambers (12, 13) being processed by the processing means to provide an indication of the weight or thickness of the or each coating irrespective of composition, or of the composition of the coating or coatings. The filters (14, 15) are preferably absorption-edge filters and the source of primary radiation (11) may be either an X-ray generator or a radio-isotope producing Gamma radiation. The absorption of the radiation filters (14, 15) fitted to the ionisation chambers (12, 13) is selected so as to pass the reflected secondary radiation in accordance with the materials being subjected to the primary radiation from the source (11).

## COATING WEIGHT AND THICKNESS GAUGES

This invention relates to gauges, for the measurement of the weight and thickness of coatings applied to substrate various materials or to the thickness of the substrate base or material, and is particularly, but not exclusively concerned with measuring for example, the weight and thickness of a metallic alloy coating applied to a steel base or substrate, although the technique with which this invention is concerned may also be applied to materials in the form of sheets, films or foils.

The invention is concerned with the principle that if a sample of a material is subjected to either X-rays or to gamma radiation, of suitable energy intensity, each of the elements of the sample will emit a characteristic secondary energy. This is detected by suitable means and in the case where the detector means is a proportional counter, the amplitude of the output pulses will be proportional to the radiation energy and the counter rate at each amplitude will be proportional to the intensity of the radiation. Each energy can then be isolated by level discriminating circuitry to determine each energy.

Previously, the measurement and control of the thickness of a material, or the thickness and quality of a coating for such a material has been achieved with the use of radiation gauges, employing one of two different types of radiation source, namely an isotape or an X-ray generator. The detected radiation has been processed by a number of different devices, such as a Geiger-Muller tube, a scintillation counter, an ionisation chamber or a proportional counter. However, each combination of radiation source and detector, in addition to its particular advantages, is also subject to certain practical disadvantages.

A common application of the above technique is in the measurement of coating weight per unit of area on a continuously moving metal strip, for example a coating of zinc on a moving steel strip, the measurement being effected by the use of X-ray fluorescence. Typically, the base metal and/or the coating are excited by the primary radiation source, in the form of an isotape or an X-ray generator and a secondary radiation is produced. The secondary radiation given off by the coating, or that given off by the base material substrate and at least partially absorbed by the coating and/or the substrate is initially measured and represents a measurement of the weight of the coating. The secondary emission may be processed either by a proportional counter detector or by an ionisation chamber detector. Speed and accuracy of measurements are interrelated and of importance, so that when a fast and accurate measurement is required, an ionisation chamber providing a continuous output signal is to be preferred, however, its sensitivity to the composition of the coating tends to limit its practical accuracy.

In contrast, the proportional counter form of detector has a limited accuracy and speed response in its maximum count rate, while nevertheless having the advantage that it is more sensitive to different radiation energies (wavelengths) and is able to differentiate between the differing types of detectable radiation.

A gauge has been produced which is able to measure both coating weight and coating composition, based on the energy detection and discrimination properties of the proportional counter detector, in which a sample is subjected for example to a beam of Gamma rays or X-rays of suitable energy, the different elements emitting characteristic secondary radiation.

Using a proportional counter, the output pulses have an amplitude proportional to the radiated energy, the count units at each amplitude being proportional to the intensity of the radiation. However, for present-day needs, this arrangement lacks speed and accuracy of response, particularly since it is currently apparent that faster and more accurate measurement is need to be able to monitor and improve quality and to give a more uniform product, for example through a closed loop control system. Also, more exotic coatings in particular certain alloys are being used and it is also desirable to be able to use thinner coatings. It is also evident that each of the existing measurements and control systems is not capable of achieving the desired results.

According to this invention an apparatus for measuring the weight and thickness of a coating or coatings appliled to a substrate or the thickness of the substrate, including a primary radiation source, a detector means and means for processing radiation reflected by the coating or coatings or the substrate, characterised in that a source of primary radiation is provided, the output of which is applied to the coating or coatings and the substrate and means are provided for detecting the reflected secondary radiation, including at least two energy-sensitive or energy-dependent detectors, comprising ionisation chambers fitted with energy-sensitive radiation filters, the outputs of the chambers being connected to means for processing the outputs to provide an indication of the weight and thickness of the coating or coatings or the thickness of the substrate.

4

A coating weight gauge embodying in combination a pair of ionisation chambers, absorption edge filters and suitable signal processing and computation means is able to provide for faster more precise measurements and swifter automatuc compensation for changes in the composition of the materials being sensed.

The invention also provides a technique by which the composition can be monitored and measured to compensate the ionisation chamber signals, a similar technique being applicable to radiation thickness gauges. Both X-rays and Gamma ray radiation absorption are dependent on the composition of the absorbing material and the accuracy of a radiation thickness gauge, relying on absorption will be dependent on the material being measured.

In accordance with the invention, a measuring head incorporating an energy-sensitive or energy-dependent detector means such as an ionisation chamber, fitted with an absorption-edge filter in operative combination with a second energy-sensitive detector means such as an ionisation chamber fitted with a different absorption-edge filter, facilitates the automatic correction for certain material compositions with improved speed and accuracy measurements, hitherto not achievable.

A further feature of this detector configuration is that both ionisation chambers can be incorporated within one detector housing, thereby ensuring that the same measurement area on this coated sheet is seen simultaneously. This feature also eliminates errors resulting from base steel thickness variation and significantly reduces errors resulting from ambient air temperature and pressure variation.

The operation of the arrangement according to the invention will now be described by way of example and with reference to the accompanying drawings, in which :-

Figure 1 is a schematic general configuration of the arrangement,

Figure 2, is a schematic block circuit diagram of a twin ionisation chamber and signal processing system, and

Figure 3 and 3a, illustrate, diagrammatically, the behaviour of a radiation beam directed at two different types of coating on a substrate.

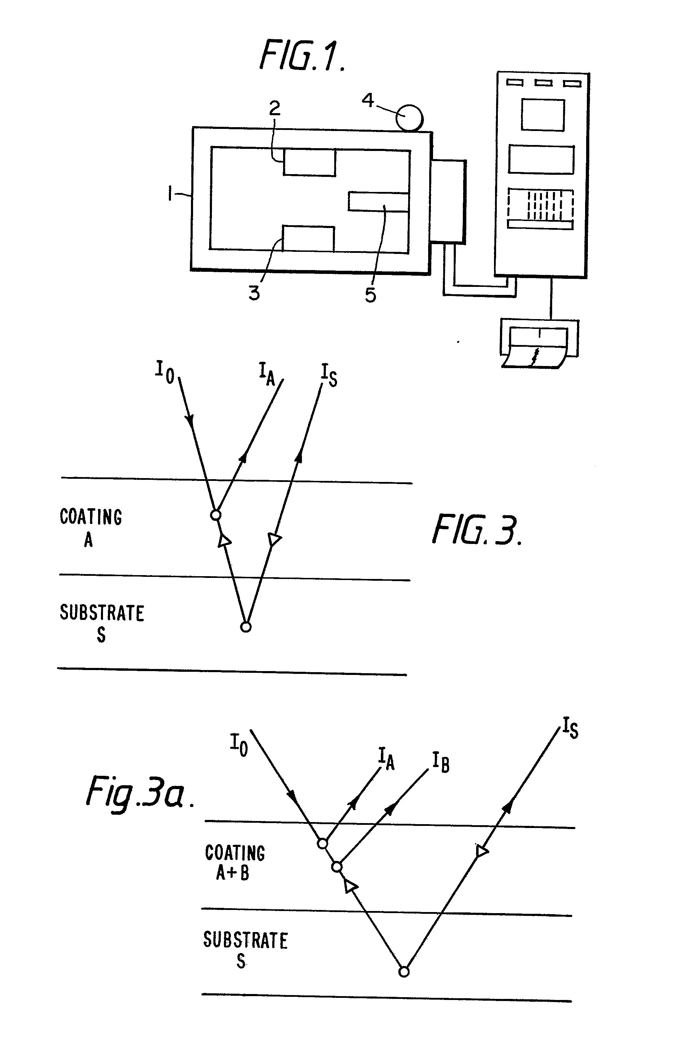

The apparatus shown in Figure 1 is used for example for the on-line measurement of a coating such as zinc, a zinc-aluminium alloy or other metallic coatings applied to a strip of steel, travelling at a linear speed typically of between 100 and 200 metres/minute. As shown in this diagram, the apparatus consists of a closed frame 1 transversely encircling the moving steel strip and supporting upper and lower measuring heads 2, 3, which are selectively movable across the width of the strip by means of a scanning motor 4. The frame also supports a calibration unit 5 opposite which the measuring heads can be located, so that the scanning may be effected in any particular width-wise location or continuously of the running strip. Each of the measuring heads includes a radiation source with a solenoid-operated shutter, a twin ionisation chamber and absorption edge filters comprising a differential energy-sensitive detector with two output signals, each of which is related differently to both coating weight and coating compositions.

The two detectors feed their outputs to an electronic processing unit which incorporates display means indicating for example the instantaneous weight of a top coating and/or a bottom coating and an instantaneous total coating weight, together with an indication of the coating composition. The display may be digital or it may also be displayed on a video display unit screen graphically or in the form of a table.

Included in this processing unit are the operating control means, enabling selected functions to be monitored, instructions to be entered and control commands generated to supervise the operation of the apparatus.

In one embodiment of the invention, the video display unit may enable the operator to view certain information, such as the instantaneous width profile showing deviations of coating weight and/or composition from predetermined reference control values; an exponentially averaged plot of these deviations, a length profile using the average of a chosen number of scans, a status display of selected process variable and a display of detected fault conditions, each being selected by the operator.

The apparatus operates according to the following principles: when a sample is subjected to a beam of Gamma rays or X-rays of a suitable energy level, all the elements in the sample will be excited to emit a characteristic secondary radiation. If the energy-sensitive detector is a pair of ionisation chambers with appropriate absorption edge filters, the output signal from each respective ionisation chamber will be directly related to coating weight and coating composition but in a different manner for each respective filter. The use of suitable electronic signal conditioning enables each energy level to be isolated and its intensity mathematically determined, thereby enabling derivation of the magnitude of the coating alloy elements.

Figure 3 shows the energy paths of a radiation beam directed at a single-element coating A on a single element substrate S. The beam has an initial energy intensity $I_O$ which passes through the coating A and into the substrate S, resulting in fluorescent beams of intensity $I_A$ and $I_S$ fluorescence energy levels A and S respectively.

The level of intensity $I_S$ decreases with coating weight, whereas intensity $I_A$ increases with coating weight and the gauging arrangement must be able to accurately discriminate between the energy levels A and S. In the case of Figure 3a, the coating consists of two elements A and B in the form of a mixture or alloy; the substrate S produces radiation of an intensity $I_S$, whereas the measurements of the emitted radiations $I_A$ and $I_B$ provide two values for the calculation of the respective weights and proportions of the elements A and B. In these two Figures, absorption of radiation is indicated by a triangular sign, while the generation of fluoresence is indicated by a circle in the individual material.

The ionisation chamber detector is a gas-filled, metal chamber in which is a positively polarised anode electrode. A Gamma ray passing through the gas produces free electrons and positive ions by the interactions already referred to, the electrons being attracted to the positive electrodes or anodes where they are collected to form a pulse. At low anode voltages, the electrons may recombine with the ions, giving a signal reduction; recombination may also occur when the ion density is high. At a sufficiently high anode voltage nearly all the electrons are collected by the anode so that the detector functions as an ionisation chamber.

At higher voltage, the electrons are accelerated towards the anode at energies high enough to ionise other atoms, thereby increasing the number of electrons. Over a wide voltage range, the output pulse, which is now much larger than for a ionisation chamber is proportional to the original ionisation. At still higher voltages, the electron multiplication is even greater and the number of electrons collected is independent of initial ionisation.

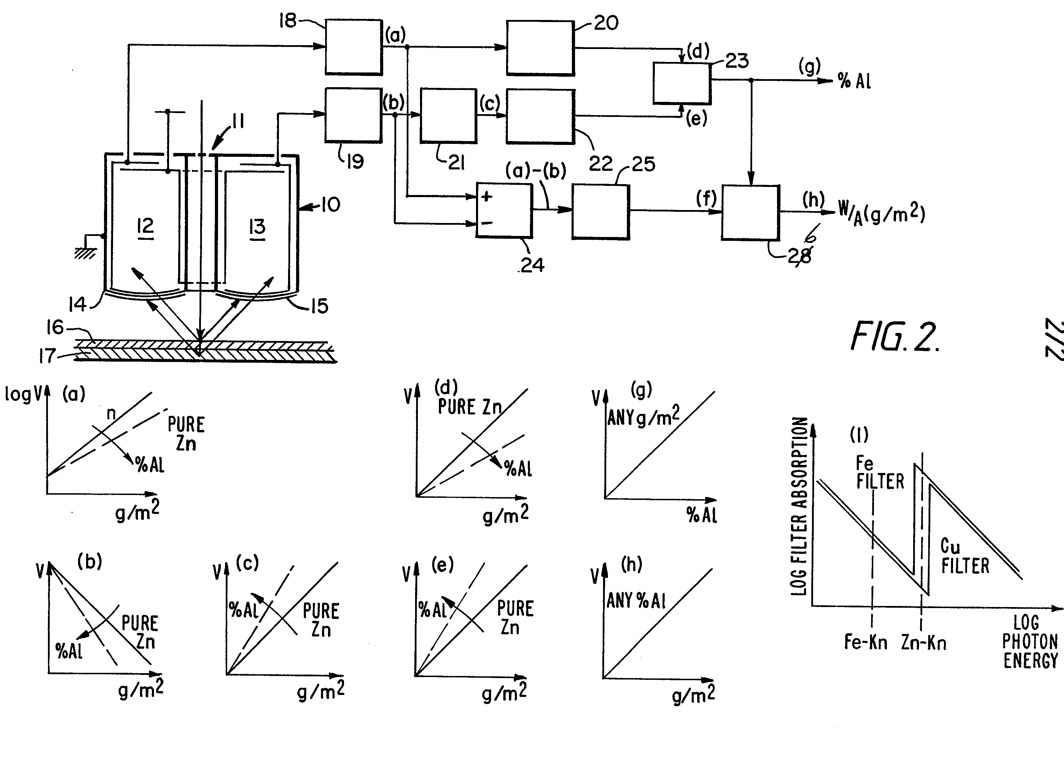

As shown diagrammatically in Figure 2, in this embodiment of the invention, the source of the primary radiation may be a Gamma ray obtained from a radio-isotope mounted on the front of the twin ionisation chamber or, preferably and as illustrated, it may be an X-ray tube the beam of which passes through the central aperture of an annular twin ionisation chamber. The use of the twin ionisation chamber, rather than two chambers which are completely separate from each other ensure that the same area on the sheet surface is measured simultaneously by both chambers. Also, because of filter balancing at the fluorescent energy of iron and the higher back-scatter energies, the coating measurement is rendered insensitive to variations in the base steel thickness. This differential measurement technique also minimises errors resulting from ambient air density variation with temperature and pressure.

The twin ionisation chamber 10 of Figure 2 contains the radiation source 11 and two ionisation chambers 12 and 13, arranged in an annular form around the primary radiation beam, the chamber 12 having a copper filter 14 and the chamber 13 having an iron filter (or nickel) 15, to be used in the measurement of a coating of zinc-aluminium alloy on a steel substrate 16 and 17 respectively.

Radiation from the scanned sheet is reflected back to the chambers 12 and 13, the outputs of which being supplied to respective current-to-voltage converter/amplifiers 18 and 19 and then in the case of the output (a) from the chamber 12, to a signal lineariser and normaliser 20. The output (b) from the chamber 13 is fed to a signal inverter 21 before also being supplied to a signal lineariser/normaliser 22 (signal c).

From the lineariser/normaliser 20 to the processed signal from the chamber 12 is fed as a signal (d) to a divider 23 which also receives a signal (e) obtained from the lineariser/normaliser 22 representing the output from the chamber 13.

The two outputs (a) and (b) are also fed from their respective coverter/amplifiers 18, 19 to a summing circuit 24, the output from this circuit being passed to a lineariser 25. The lineariser 25 delivers an output (f) to a calibration compensator or gain correction circuit 26, to which is also supplied the output from the divider 23, this output simultaneously being a signal (g) which is an indication of the proportion of aluminium in the zinc coating. A calibration compensator produces an output (h) which is a coating weight signal. This figure also includes some graphical illustrations of the various signals (a) to (h) the signals (a) to (e) varying as shown with changes in the aluminium content of the zinc coating.

The general principle of operation of this apparatus is as follows :-

The effect of the copper and iron filters in the measurement of the zinc coating is shown in the diagram of Figure 2. Characteristic absorption edges of copper and iron occur at energies just above and below the zinc fluorescent energy, Zn-Koc. The filter thicknesses are adjusted in practice to use a zero differential signal (f) from the lineariser 25 if base steel is scanned by the detector. In the presence of a zinc coating, the chamber 12 having the copper filter 14 yields a signal (a) which increases as the zinc coating increases, whereas the chamber 13 with its iron filter 15 conversely produces a signal (b) which decreases as the zinc coating increases.

The difference between the signals (a) and (b) results from the relatively high absorption co-efficient of iron with respect to copper at the zinc fluorescent energy level, Zn-K. A detector of this form may be more correctly described as energy dependent rather than energy sensitive.

As the proportion of aluminium in the coating increases, the energy levels of zinc and iron fluorescence Zn-K and Fe-K are attenuated as shown by the graphic diagrams of the signals (a) and (b) of Figure 2. The signal (c) is derived by the simple subtraction of the signal (b) from the value of this signal corresponding to base substrate or zero coating weight.

After converting the signals from exponential to linear characteristics, the calibration of the signals (d) and (e) are adjusted to be identical in the case of a pure zinc coating only. Any addition of aluminium to the coating will result in a corresponding divergence in the calibration of the signals (d) and (e) as shown by the dotted lines in the graphic diagrams of these two signals. It will be evident that the ratio (d:e) of the slopes of the two dotted lines will yield a direct relationship which is representative of the aluminium content, expressed in percentage terms and which is available in the form of the signal (g).

The differential signal (f) fed to the calibration compensation circuit 26 is similar to the signal (d) but the Fe-K component of the indication is cancelled by the balance of the copper and iron filters 14 and 15. This signal is independent of the base metal thickness and is thus directly related to the weight of the coating of zinc or zinc and aluminium. The signal (g) is therefore available to provide a measurement of the aluminium percentage and to correct the calibration so that the resultant signal (h) will be indicative of the weight of the coating, irrespective of its aluminium content.

An arrangement of the gauging system as outlined above, is able to provide a more accurate measurement with improved signal discrimination and higher speed of response, enabling faster and more positive control of quality, particularly through closed-loop control systems, even where coatings of a more exotic nature, particularly of certain alloys, or thinner coatings are being used, enabling the disadvantages of existing guaging sytems to be greatly minimised.

12

CLAIMS

1. An apparatus for measuring the weight and thickness of a coating or coatings applied to a substrate or the thickness of the substrate, including a primary radiation source, a detector means, a means for processing radiation reflected by the coating or coatings or the substrate, characterised in that a source of primary radiation (11) is provided, the output of which is applied to the coating or coatings and the substrate and means (10) are provided for detecting the reflected secondary radiation, including at least two energy-sensitive or energy-dependent detectors comprising ionisation chambers (12, 13) fitted with energy-sensitive radiation filters (14, 15), the outputs of the chambers (12, 13) being connected to means (6) for processing the outputs to provide an indication of the weight and thickness of the coating or coatings or the weight of the substrate.

2. Apparatus according to Claim 1 characterised in that the ionisation chambers (12, 13) are provided with absorption edge filters (14, 15).

3. Apparatus according to Claim 2, characterised in that the absorption filters (14, 15) provided on each of the ionisation chambers (12, 13) are absorption edge filters which are different from each other and whereby the different components of a coating can be differentiated from one another.

4. Apparatus according to any one of Claims 1 to 3, characterised in that the ionisation chambers (12, 13) are contained in a common housing (10) which also incorporates the source of primary radiation (11).

5. Apparatus according to any one of the preceding Claims characterised in that the apparatus comprises a frame (1) which encircles the substrate, the frame supporting measuring heads (2, 3) which can be positioned in selected locations with respect to the substrate and a calibration unit (5) is provided in association with the frame, the position of the measuring heads being controlled by the calibration unit and each measuring head including a source of primary radiation (11) and a differential energy-sensitive or energy-dependent detector (10) incorporating ionisation chambers (12, 13) fitted with energy-sensitive radiation filters (14, 15), which generates output signals each of which is related to a different reflective radiation measurement.

6. Apparatus according to Claim 1 or Claim 5, characterised in that the outputs of the chambers (12, 13) are connected to the inputs (18, 19) of a processing unit (6) having means to indicate the processed measurements.

7. Apparatus according to any one of the preceding Claims, characterised in that each ionisation chamber (12, 13) has a gas-filled chamber containing polarised electros, a pair of said chambers (12, 13) being arranged in an annular form in a housing around the source of primary radiation (11), the absorption of the radiation filters (14, 15) fitted to the ionisation chambers (12, 13) being selected to pass the reflected secondary radiation in accordance with the materials being subjected to the primary radiation source (11).

8. Apparatus according to any one of Claims 1 to 7, characterised in that the source of primary radiation (11) is either an X-ray generator or a radio-isotope.

14

9.    A method of measuring the weight and thickness of a coating or coatings applied to a substrate or the thickness of the substrate, characterised in that the method comprises subjecting the coating or coatings or the substrate to radiation of a primary source (11), reflecting the secondary radiation from the coating or coatings or the substrate to energy-sensitive or energy-dependent detector means, including ionisation chambers (12, 13) through selected energy-sensitive radiation filters (14, 15), the outputs of the ionisation chambers (12, 13), being processed to give an indication of the individually sensed signals corresponding to the weight and thickness of a coating or coatings or the thickness of the substrate.

1/2

0206735

FIG.1.

FIG.3.

Fig.3a.

FIG.2.